# EUROPÄISCHE PATENTSCHRIFT

(11) **EP 2 719 647 B1**
(45) Veröffentlichungstag und Bekanntmachung des Hinweises auf die Patenterteilung: **24.08.2016**
(21) Anmeldenummer: 13188455.3
(22) Anmeldetag: 14.10.2013
(51) Int. Cl.: B65H 35/00, B65H 37/00, B32B 37/00

(54) **Verfahren und Vorrichtung zum Aufbringen eines streifenförmigen Materials auf ein Objekt**
Method and apparatus for applying strip material to an object
Procédé et dispositif destinés à l'application d'un matériau en forme de bandes sur un objet

(30) Priorität: 15.10.2012 DE 102012109804; 15.01.2013 DE 102013100397
(43) Veröffentlichungstag der Anmeldung: 16.04.2014
(73) Patentinhaber: Reis Group Holding GmbH & Co. KG, 63785 Obernburg (DE)
(72) Erfinder: Bischof, Thomas, 52066 Aachen (DE); Danz, Harald, 52146 Würselen (DE)
(74) Vertreter: Stoffregen, Hans-Herbert

(56) Entgegenhaltungen:
- WO-A1-2010/097458
- DE-B3-102004 021 622
- GB-A- 2 486 230

## Beschreibung

Die Erfindung bezieht sich auf ein Verfahren zum Aufbringen eines Materials, insbesondere streifenförmigen Materials, auf einen Kontaktbereich eines Objektes, insbesondere auf einen ersten Abschnitt, wie Schenkel, eines Rahmens, der von zumindest einem von dem ersten Abschnitt ausgehenden oder diesen begrenzenden zweiten Abschnitt, wie Schenkel, begrenzt ist, wobei das streifenförmige Material in einer Aufbringrichtung mittels eines Andrückelementes auf den Kontaktbereich aufgebracht wird und das Andrückelement von einem verschwenkbaren Schwenkelement ausgeht oder ein Abschnitt von diesem ist, das mit einer Halterung verbunden ist.

Auch nimmt die Erfindung Bezug auf eine Vorrichtung zum Aufbringen eines Materials, vorzugsweise streifenförmigen Materials, insbesondere eines einen Liner aufweisenden Klebebands, auf einen Kontaktbereich eines Objekts, insbesondere eines zumindest eine Innenecke aufweisenden Objekts, wie Rahmen, umfassend
- eine Halterung, die relativ zu dem Objekt bewegbar ist,
- einen ersten Antrieb zum Transport des streifenförmigen Materials,
- ein von einem Schwenkelement ausgehendes Andrückelement, dem das streifenförmige Material mittels des ersten Antriebs zuführbar ist und über das durch Druckbeaufschlagung das streifenförmige Material auf den Kontaktbereich aufbringbar ist, wobei das Schwenkelement mit der Halterung verbunden ist,
- sowie ggfs. eine Schneideinrichtung.

Der DE-T-695 03 548 (EP-B-0 676 352) ist ein Klebebandauftragegerät zu entnehmen. Dabei wird ein Klebeband über ein angetriebenes Vakuumrad auf eine Materialbahn aufgetragen. Mittels einer CPU wird die Geschwindigkeit der Materialbahn bestimmt, um sodann das Vakuumrad nach zunächst erforderlicher Beschleunigung mit gleicher Geschwindigkeit anzutreiben. Für die zur Synchronisation erforderliche Beschleunigung des Vakuumrades muss die Länge des auf dem Vakuumrad aufgetragenen Klebebands kleiner als der Umfang des Vakuumrades sein.

Die DE-B-10 2004 021 622 bezieht sich auf eine Vorrichtung und ein Verfahren zum Aufbringen eines Klebebandes. Hierzu wird das Klebeband zwischen Rollen erfasst und von einer Vorratsrolle unter Spannung abgezogen, um auf einen aufzubringenden Gegenstand wie Kante oder Papierrolle ausgerichtet zu werden. Nach Ausrichten des Klebebands auf den Gegenstand wird das Klebeband auf diesen gedrückt. Während des Zustellens der Rollen führen diese eine Hubbewegung aus.

Gegenstand der DE-T-38 78 287 (EP-B-0 286 343) ist eine Vorrichtung zum Aufbringen eines Klebebands auf ein Produkt. Um das Klebeband im Wesentlichen spannungsfrei auftragen zu können, wird dieses über eine Tänzerwalze geführt. Ferner besteht die Möglichkeit, die Geschwindigkeit des Auftragens in Abhängigkeit von der auftretenden Spannung zu ändern.

Nach der WO-A-2010/097458 wird ein zu beklebendes Objekt mittels einer Handhabungseinrichtung transportiert, wobei Geschwindigkeits- und Beschleunigungsverlauf des Objekts synchron über eine Achse des Handhabungsgeräts auf den Transport des Klebebands übertragen wird. Dieses wird über eine als Halterung für Rollen dienende Transportstation geführt, wobei eine der Rollen als Andrückrolle ausgebildet ist, über die das Klebeband auf das Objekt gedrückt wird. Die Transportstation ist verschwenkbar, um einen Abschnitt des Klebebands nach zuvor erfolgter Perforation durchtrennen zu können.

Die GB-A-2 101 519 bezieht sich auf eine Vorrichtung, um ein Band auf einen Gegenstand aufzutragen. Hierzu ist ein Portal vorgesehen, das sich über den mit dem Band zu versehenen Gegenstand erstreckt und entlang dem eine das Band auftragende Vorrichtung verfahrbar ist, die in Z-Richtung verstellbar ist. Um die Z-Achse kann die Vorrichtung auch verschwenkt werden.

Gegenstand der US-B-6,634,401 sind eine Vorrichtung und ein Verfahren zum Aufbringen eines Klebebandes auf eine Oberfläche eines Gegenstandes wie eine Glasplatte. Hierzu geht eine Andrückrolle von einem ersten Arm aus, der seinerseits mit einem um eine Achse verschwenkbaren zweiten Arm verbunden ist. Mittels eines Betätigers kann der erste Arm eine Hubbewegung ausüben, um Unebenheiten auf der Oberfläche auszugleichen.

Nach der US-B-6,808,581 wird ein Klebeband über eine Andrückrolle auf eine Materialrolle aufgetragen. Die Andrückrolle geht von einem Schwenkhebel aus.

Die US-A-5,779,830 bezieht sich auf eine Aufbringvorrichtung für ein flexibles Band. Dabei geht von einem Roboterarm ein Applikatorkopf aus. Ein auf einen Gegenstand aufzubringendes Band wird über eine Andrückrolle auf den Gegenstand gedrückt, die um eine Achse drehbar ist, die von einem Führungsblock ausgeht, der vertikal verstellbar ist.

Um in Fensterrahmen Scheiben einzusetzen, werden diese üblicherweise mit Klammern gehalten. Da nur eine punktuelle Abstützung erfolgt, müssen die Rahmen eine hinreichende Steifigkeit aufweisen. Wünschenswert wäre es, wenn die Scheibe bei der Montage zunächst umfangsseitig umlaufend mit den Rahmenschenkeln verbunden wäre, so dass die Rahmen leichter ausgebildet werden können. Um entsprechende Klebestreifen in den Rahmen einzubringen, ist jedoch ein automatisches Befestigen der Klebestreifen in Bezug auf die Ecken nur schwierig zu bewerkstelligen, so dass entweder die Ecken ausgelassen werden oder aber ein manuelles Zuarbeiten erforderlich ist.

Aufgabe der vorliegenden Erfindung ist es, ein Verfahren und eine Vorrichtung der eingangs genannten Art so weiterzubilden, dass ein vollautomatisiertes Aufbringen insbesondere eines streifenförmigen Materials auf ein Objekt, insbesondere ein einen Liner aufweisendes Klebeband in einem Rahmen aufgebracht werden kann, wobei auch in Eckbereichen oder Vertiefungen ein automatisches Aufbringen möglich sein soll.

Erfingdungsgemäß wird die Aufgabe dadurch gelöst, dass das Schwenkelement während des Aufbringens des streifenförmigen Materials auf den Kontaktbereich in und/oder entgegen der Aufbringrichtung verschwenkt wird und im Verlauf der Schwenkbewegung eine Hubbewegung durchführt. Dabei befindet sich das Material während der überlagerten Schwenk-/Hubbewegung in Kontakt mit dem Objekt.

Die Schwenkbewegung des Schwenkelementes wird mittelbar oder unmittelbar aktiv mittels eines Antriebs durchgeführt.

Erfindungsgemäß ist vorgesehen, dass das streifenförmige Element um ein Andrückelement wie Andrückrolle eines Schwenkelementes geführt wird, das in Bezug auf die Aufbringrichtung des streifenförmigen Materials in Richtung dieser oder entgegengesetzt zu dieser während des Aufbringens des Materials verschwenkbar ist, so dass problemlos Ecken oder Vertiefungen in dem Objekt mit dem streifenförmigen Material versehen werden können, also insbesondere bei Fensterrahmen ein Klebeband auch vollständig in die Ecken eingebracht werden kann. Dies wird durch das Verschwenken des Schwenkelementes ermöglicht, das in Abhängigkeit von der Schwenkstellung in Bezug auf eine Nullstellung dieser vor- oder nacheilt. Das Verschwenken während des Aufbringens ist dabei auch so zu verstehen, dass nur zeitweise ein Verschwenken erfolgt.

Durch die Überlagerung der Schwenk- und Linearbewegung, durch die ein Hub ermöglicht wird, ist sichergestellt, dass die das Schwenkelement aufweisende Halterung durch Verschwenken des Schwenkelementes dem Objekt nicht ausweichen muss, so dass eine problemlose Führung und somit eine kontrollierbare Relativbewegung zwischen dem Objekt und der Halterung sichergestellt ist. Die Linear- oder Hubbewegung des Schwenkelementes kann durch Exzenterbewegung des Schwenkelementes oder durch ein Verstellen der Halterung selbst realisiert werden.

Der Schwenkwinkel - ausgehend von einer 0°-Stellung - kann zwischen -80° und +80° betragen. +80° bedeutet, dass der Schwenkhebel in Auftragsrichtung, und -80° bedeutet, dass der Schwenkhebel entgegen Auftragsrichtung des auf das Objekt aufzubringenden Materials verschwenkt ist. Bei der Ausgangsstellung verläuft der Schwenkhebel senkrecht zu einem geradlinig verlaufenden Abschnitt des Objekts, stimmt also mit der Normalen des Abschnitts überein. Dies stellt die 0°-Stellung dar. Vorzugsweise wird das Schwenkelement um einen Winkel zwischen +45° und -45° verschwenkt.

Die Hublänge sollte bis 20 mm, vorzugsweise bis 12 mm betragen.

Um sicherzustellen, dass ungeachtet des Verschwenkens des Schwenkelementes das Material wie Klebeband spannungsfrei oder stets mit gewünschter vorgegebener Spannung auf das Objekt aufgebracht wie aufgeklebt wird, sieht ein hervorzuhebender eigenerfinderischer Vorschlag der Erfindung vor, dass das streifenförmige Material mittels eines Antriebs zu dem Andrückelement transportiert wird und die Transportlänge in Abhängigkeit von der Relativbewegung zwischen der Halterung und dem Kontaktbereich und der Schwenkbewegung während des Druckkontakts zwischen dem Andrückelement und dem Kontaktbereich geregelt wird.

Das streifenförmige Material wird aktiv transportiert, wobei pro Zeiteinheit das auf ein Objekt aufgebrachte streifenförmige Material der Wegstrecke in der Zeiteinheit entspricht, die aufgrund der Relativbewegung zwischen dem Objekt und der Halterung unter Einbeziehung der Schwenkbewegung zurückgelegt wird.

Wird das Schwenkelement in Aufbringrichtung verschwenkt, so wird der Antrieb zum Transport des streifenförmigen Materials so geregelt, dass neben der aufgrund der Relativbewegung zwischen Objekt und Halterung pro Zeiteinheit zurückgelegten Strecke die in derselben Zeiteinheit relativ zurückgelegte Strecke des Andrückelements in Aufbringrichtung berücksichtigt wird, so dass infolgedessen eine größere Länge an streifenförmigem Material dem Andrückelement zugeführt werden muss, als wenn eine Schwenkbewegung nicht erfolgen würde. Entsprechend wird die Länge des zu transportierenden Streifenmaterials verringert, wenn während der Relativbewegung zwischen dem Objekt und der Halterung das Schwenkelement entgegen der Aufbringrichtung verschwenkt wird.

Insbesondere ist vorgesehen, dass die Halterung und/oder das Objekt mittels einer Handhabungseinrichtung bewegt und der Antrieb für den Transport des streifenförmigen Materials mittels der Steuerung der Handhabungseinrichtung geregelt wird. Insbesondere wird die Halterung während des Aufbringens bei ortsfest positioniertem Objekt verstellt.

Um eine Schwenk- und Linearbewegung des Schwenkelementes zu ermöglichen, ist insbesondere vorgesehen, dass das Schwenkelement einerseits um eine von einem von der Halterung ausgehenden Schwenkarm ausgehende Achse geschwenkt und andererseits mittels eines von der Halterung ausgehenden und in einen in dem Schwenkelement vorhandenen Längsschlitz eingreifenden Vorsprungs geführt wird.

Alternativ sieht die Erfindung vor, dass das Schwenkelement um eine von der Halterung ausgehende Achse verschwenkbar ist und der beim Verschwenken erforderliche Hub über die Halterung mittels eines Betätigungselementes wie Zylinder, Feder oder Spindel realisiert wird.

Eine Vorrichtung der eingangs genannten Art zeichnet sich dadurch aus, dass das Schwenkelement um eine von der Halterung ausgehende erste Achse schwenkbar und die Halterung abstandsmäßig quer zum Kontaktbereich verstellbar ist oder dass das Schwenkelement um eine von einem Schwenkarm ausgehende zweite Achse schwenkbar ist, der von der Halterung ausgeht und um eine dritte Achse schwenkbar ist, und dass das Schwenkelement einen Längsschlitz aufweist, der von einem von der Halterung ausgehenden Vorsprung durchsetzt ist, wobei der Längsschlitz in Bezug auf den Kontaktbereich derart verläuft, dass das Schwenkelement unabhängig von seiner Stellung über das Andruckelement zum Aufbringen des streifenförmigen Materials dieses in Richtung des Kontaktbereichs druckbeaufschlagt. Die durch die alternativen konstruktiven Lösungen ermöglichte überlagerte Hub-/Schwenkbewegung erfolgt dann, wenn das Material das Objekt kontaktiert, insbesondere in Eckbereichen oder Vertiefungen des Objekts, ohne dass der Kontakt zwischen Material und Objekt unterbrochen wird.

Die erfindungsgemäße Vorrichtung ermöglicht es, dass Ecken oder Vertiefungen eines Objektes mit dem streifenförmigen Material, insbesondere einem Klebeband versehen werden können, wobei die erforderliche Druckbeaufschlagung in den Vertiefungen bzw. Ecken mittels des Schwenkelementes, d. h. des von diesem ausgehenden Andrückelements wie Andrückrolle erfolgt. Dies wird dadurch sichergestellt, dass die Andrückrolle im gewünschten Umfang zu dem Objekt bzw. dessen Kontaktbereich um die erste bzw. zweite Achse verschwenkbar ist. Dabei kann in Aufbringrichtung des streifenförmigen Materials betrachtet das Andrückelement vor oder hinter der ersten bzw. zweiten Achse das streifenförmige Material in Richtung des Kontaktbereichs druckbeaufschlagen.

Um ungeachtet des Verschwenkens, das zu einer Kreisabschnittsbewegung des Andrückelements aufgrund des Verschwenkens des Schwenkelements um die erste bzw. zweite Achse führt, einen gleichbleibenden oder im Wesentlichen gleichbleibenden Kontakt zu dem Objekt sicherzustellen, wird das Schwenkelement in Abhängigkeit von der Schwenkstellung linear verstellt. Dies kann zum einen dadurch erfolgen, dass die Halterung selbst einen Hub ausübt. Dies kann aber auch mittels Federlagerung, Druckzylinder oder Spindelantriebs erfolgen.

Bevorzugterweise wird jedoch die überlagerte Dreh- und Linearbewegung durch das Schwenkelement selbst realisiert, indem das Schwenkelement eine Exzenterbewegung durchführt. Diese wird dadurch ermöglicht, dass das Schwenkelement um die zweite Achse, die von dem Schwenkarm ausgeht, der um eine von der Halterung ausgehende dritte Achse schwenkbar ist, geschwenkt wird und überlagernd eine Linearbewegung durchführt, indem in einen Längsschlitz ein Vorsprung wie Stift eingreift, der von der Halterung ausgeht. Dabei verläuft der Längsschlitz insbesondere in der Verbindungslinie oder in etwa der Verbindungslinie zwischen der zweiten Achse und dem Andrückelement.

Hervorzuheben ist des Weiteren, dass das Objekt und/oder die Halterung mittels einer Handhabungseinrichtung verstellbar ist und dass über deren Steuerung der erste Antrieb in Abhängigkeit sowohl von der Relativbewegung zwischen dem Objekt und der Halterung als auch der Schwenkbewegung des Schwenkelements während des Aufbringens des streifenförmigen Materials regelbar ist.

Als Transportmittel für das streifenförmige Material dient ein mit diesem verbundenes weiteres streifenförmiges Material, das insbesondere ein Liner ist. Damit dieses bzw. dieser nicht merklich gedehnt wird, nachdem das streifenförmige Material auf das Objekt bzw. dessen Kontaktbereich aufgetragen ist, ist insbesondere vorgesehen, dass der erste Antrieb von dem Schwenkelement ausgeht.

Des Weiteren sieht die Erfindung insbesondere vor, dass von dem Schwenkelement die Schneideinrichtung ausgeht. Somit besteht die Möglichkeit, auch kurze Abschnitte aufzubringen, da der Abstand zwischen Andrückelement und Schneideinrichtung relativ kurz gehalten werden kann. Ggfs. kann die Schneideinrichtung auch von der Halterung ausgehen.

Der Schwenkarm selbst ist über einen zweiten Antrieb verschwenkbar, der gleichfalls von der Halterung ausgeht.

Ist als bevorzugter Anwendungsfall der erfindungsgemäßen Lehre das Aufbringen eines Klebebandes auf ein Objekt wie in den Schenkel eines Rahmens wie Fensterrahmens zu sehen, so ist die erfindungsgemäße Lehre hierauf nicht beschränkt. So kann beispielweise eine Dichtleiste in einen Rahmen bzw. ein streifenförmiges Material in eine Nut aufgebracht bzw. eingedrückt werden. Die Dichtleiste bzw. das streifenförmige Material sollten ebenfalls über ein Trägermaterial wie -band oder -streifen transportiert werden.

Weitere Einzelheiten, Vorteile und Merkmale der Erfindung ergeben sich nicht nur aus den Ansprüchen, den diesen zu entnehmenden Merkmalen - für sich und/oder in Kombination - , sondern auch aus der nachfolgenden Beschreibung von der Zeichnung zu entnehmenden bevorzugten Ausführungsbeispielen.

Es zeigen:
- Fig. 1: eine Vorrichtung zum Auftragen von streifenförmigem Material,
- Fig. 2: eine Seitenansicht der Darstellung gemäß Fig. 1 in Prinzipdarstellung mit streifenförmigem Material,
- Fig. 3: eine Prinzipdarstellung eines Einsatzes der Vorrichtung zum Auftragen von streifenförmigem Material,
- Fig. 4: eine zweite Ausführungsform einer erfindungsgemäßen Vorrichtung,
- Fig. 5: eine dritte Ausführungsform einer erfindungsgemäßen Vorrichtung und
- Fig. 6: eine vierte Ausführungsform einer erfindungsgemäßen Vorrichtung.

In den Figuren, in denen grundsätzlich für gleiche Elemente gleiche Bezugszeichen verwendet werden, sind verschiedene Ausführungsformen zum Aufbringen bzw. Auftragen streifenförmigen Materials rein prinzipiell dargestellt, die Bestandteile einer Maschine bzw. eines Automaten sind.

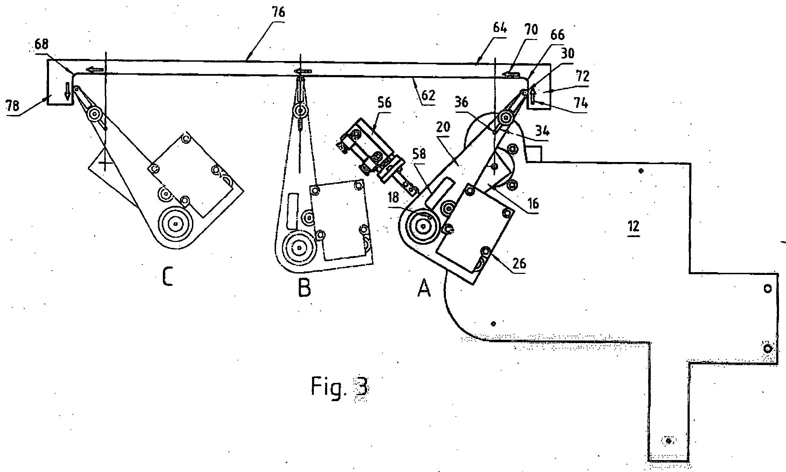

Des Weiteren ist rein prinzipiell ein Objekt in Fig. 3 wiedergegeben, auf das streifenförmiges Material aufgebracht bzw. aufgeklebt werden soll. Im Ausführungsbeispiel handelt es sich um einen Abschnitt eines Rahmens, in dessen Innenseite bzw. dessen Falz ein Klebeband aufgebracht werden soll, insbesondere auch in den Eckbereichen, also in den als kritische Bereiche zu bezeichnenden Abschnitten, die in automatischen Produktionsanlagen nur mit einem erheblichen konstruktiven Aufwand und sodann zum Teil ungenügend mit einem Klebestreifen versehen werden können.

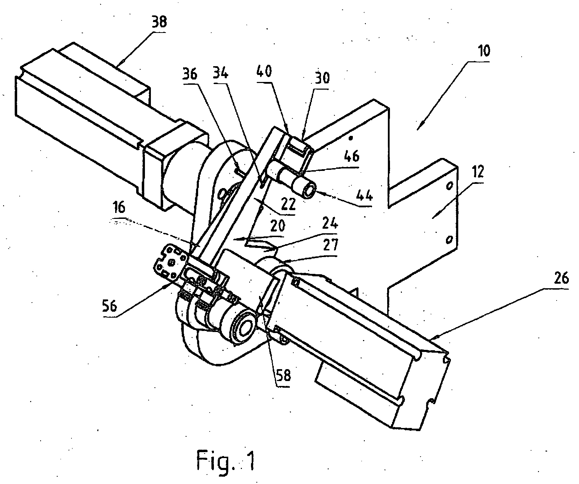

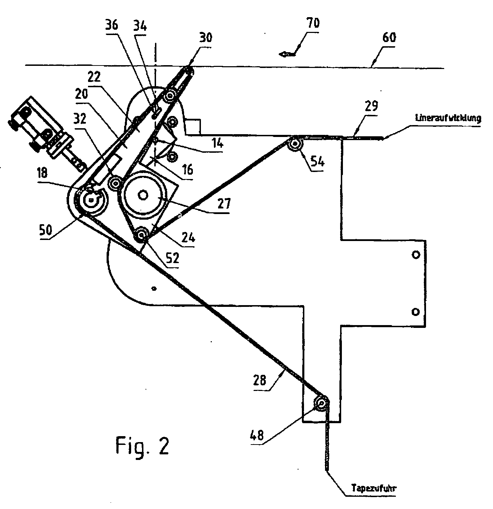

Die Vorrichtung 10 gemäß der Fig. 1 bis 3 umfasst eine Halterung, die auch als Grund- oder Trägerplatte 12 bezeichnet werden kann. Von der Platte 12, die z. B. an einer Handhabung wie Roboterarm befestigt werden kann, geht von einer als dritte Achse bezeichnete Achse 14 ein Schwenkarm 16 aus, um die der Schwenkarm 16 schwenkbar ist. Dieses Verschwenken erfolgt über einen Motor 38, der auch als zweiter Antrieb bezeichnet wird und der an der Grundplatte 12 befestigt wie angeflanscht ist. Von dem Schwenkarm 16, und zwar von seinem der Achse 14 fernliegenden Bereich geht eine als zweite Achse bezeichnete Achse 18 aus, von der ein als z. B. Schwenkhebel 20 zu bezeichnendes Schwenkelement ausgeht, das im Ausführungsbeispiel in dargestellter Seitenansicht eine L-Form mit einem Längsschenkel 22 und einem Querschenkel 24 aufweist. Von dem Querschenkel 24 geht ein Antrieb 26 aus, über den das in Fig. 2 dargestellte streifenförmige Material mittels einer Transport- oder Antriebsrolle 27 transportiert wird, welches im Ausführungsbeispiel ein Klebeband 28 mit Liner 29 ist. Der Liner 29 wird von der Antriebsrolle 27 erfasst. Hierzu wird der Liner 29 zwischen der Antriebsrolle 27 und einer Rolle 32 geführt, um durch Reibschluss transportiert zu werden. Zuvor wird das streifenförmige Material um eine Andrückrolle 30 geführt, die im Bereich des freien Endes des Längsschenkels 22 verläuft.

Dadurch, dass die Transportrolle 27 von dem Schwenkhebel 20 ausgeht, befindet sich erstere relativ nahe an der Andrückrolle 30 mit der Folge, dass ein Dehnen des Liners 29 zwischen Andrückrolle 30 und Transportrolle 27 nicht oder nicht merklich auftritt mit der Folge, dass reproduzierbar das Klebeband 28 auf das Objekt bzw. den Kontaktbereich aufgebracht bzw. aufgetragen werden kann.

Der Schwenkhebel 20 wird aktiv verschwenkt, und zwar im Ausführungsbeispiel der Fig. 1 bis 3 über den Schwenkarm 16, der seinerseits aktiv mittels des Motors 38 verschwenkt wird.

Des Weiteren weist der Schwenkhebel 20, d. h. im Ausführungsbeispiel dessen Längsschenkel 22, einen Längsschlitz 34 auf, der von einem von der Grundplatte 12 ausgehenden Stift 36 durchsetzt ist. Hierdurch bedingt vollführt der Schwenkhebel 20 bei einer Schwenkbewegung um die Achse 18 neben der Schwenkbewegung auch eine Linearbewegung.

Im vorderen Endbereich des Schwenkhebels 20 ist die die Funktion eines Andrückelements ausübende Andrückrolle 30 drehbar angeordnet, die über eine Halterung 40 mit dem Längsschenkel 22 des Schwenk hebels 20 verbunden ist. Ferner geht von dem Längsschenkel 22 unterhalb der Andrückrolle 30 eine Führungsrolle 44 aus, die parallel zu der Andrückrolle 30 einen zurückversetzten Bereich 46 als Führung für das Klebeband 28 mit dem Liner 29 vor der Andrückrolle 30 und als Führung für den Liner 29 nach der Andrückrolle 30 - betrachtet in Transportrichtung - aufweist. Aus der zeichnerischen Darstellung ergibt sich des Weiteren, dass das von einem nicht dargestellten Wickel abgezogene streifenförmige Material in Form des Klebebands 28 und des Liners 29 über Umlenkrollen 48, 50 und der Liner 29 nach Auftragen des Klebebands 28 über Umlenkrollen 52, 54 geführt werden, wobei der Liner 29 nach Verlassen der Umlenkrolle 54 einer Liner-Aufwickeleinrichtung wie -rolle zugeführt wird.

Des Weiteren geht von dem Schwenkhebel 20 eine Schneideinrichtung 56 mit zugeordnetem Schneidtisch 58 aus, zwischen denen das Klebeband 28 mit dem Liner 29 geführt wird, um in Abhängigkeit von der aufzutragenden Klebebandlänge das Klebeband 28 zu durchtrennen, ohne dass der Liner 29 durchschnitten wird.

Die erfindungsgemäße Vorrichtung 10 ermöglicht aufgrund des Zusammenwirkens des Schwenkarms 16 und des Schwenkhebels 20, dass die Andrückrolle 30 um die Achse 18 bei gleichzeitig überlagerter Linearbewegung aufgrund des Eingreifens des Stiftes 36 in das Langloch bzw. den Längsschlitz 34 derart zu einem als Kontaktbereich bezeichneten Bereich 60 eines Objektes verschwenkt wird, dass im erforderlichen Umfang Ecken und Vertiefungen oder ähnliche möglicherweise schwer zugängliche Bereiche problemlos mit dem Klebeband 28 versehen werden können. Dabei ist unabhängig von der Schwenkstellung des Schwenkarms 16 sichergestellt, dass die Andrückrolle 30 und damit das Klebeband 28 stets mit dem Kontaktbereich 60, der in Fig. 2 als Gerade dargestellt ist, in Kontakt gelangt, also die erforderliche Druckbeaufschlagung erfolgt, damit das Klebeband 28 an dem Kontaktbereich 60 haftet und der Liner 29 von dem Klebeband 28 abgezogen werden kann.

Im Ausführungsbeispiel der Fig. 3 wird die Trägerplatte 12 mittels eines nicht dargestellten Roboters entlang der Innenseite 62 eines Rahmens 64 bewegt, der Ecken 66, 68 aufweist, in denen das Klebeband 28 haftend aufgetragen werden soll. Die Aufbringrichtung des Klebebands 28 mit dem Liner 29 ist durch den Pfeil 70 gekennzeichnet.

Um die Ecke 66 mit dem Klebeband 28 zu versehen, wird die Grundplatte 12 zunächst derart verstellt, dass die Andrückrolle 30 entlang des in Fig. 3 vertikal verlaufenden Schenkels 72 in Richtung des Pfeils 74 bewegt wird. Dabei befindet sich die Andrückrolle 30 in Bezug auf die Drehachse 18 hinter der Achse 18, betrachtet in Bezug auf die Auftragsrichtung 70. In dieser Stellung (Position A) kann die Andrückrolle 30 problemlos entlang der Innenseite des Schenkels 72 und durch die Ecke 66 gefühlt werden. Sodann wird die Grundplatte 12 derart verstellt, dass die Andrückrolle 30 entlang der Innenseite 62 des Längsschenkels 76 des Rahmens 64 verstellt wird, wobei das Klebeband 28 aufgetragen wird.

Wie die punktlinierte Darstellung (Position B) verdeutlicht, wird während des Bewegens der Grundplatte 12 gleichzeitig durch Verschwenken des Schwenkarms 16 der Schwenkhebel 20 derart verstellt, dass dieser in Auftragsrichtung 70, also im Ausführungsbeispiel entgegen dem Uhrzeigersinn, verstellt wird. Ungeachtet der hierdurch bedingten Kreisbewegung der Andrückrolle 30 kann die Grundplatte 12 parallel zu dem Längsschenkel 76 verfahren werden, da die Schwenkbewegung des Schwenkhebels 20 von der Linearbewegung überlagert wird. Dies wird durch das Eingreifen des Stiftes 36 in den Längsschlitz 34 ermöglicht. Somit kann der Schwenkhebel 20 eine Hubbewegung in Bezug auf den Längsschenkel 22 ausüben. In der punktlinierten Darstellung in Fig. 3 (Position B) befindet sich die Andrückrolle 30 in einer Stellung, in der der Längsschlitz 34 in etwa senkrecht zur ebenen Fläche 62 des Längsschenkels 76 des Rahmens 64 verläuft. Der Längsschlitz 34 verläuft im Übrigen in etwa in Längsrichtung des Längsschenkels 22, wie sich aus der zeichnerischen Darstellung ergibt. Der Längsschlitz 34 kann in seinem Verlauf auch dadurch charakterisiert werden, dass er entlang der Verbindungslinie zwischen der Schwenkachse 18 des Schwenkhebels 20 und der Andrückrolle 30 verläuft.

Damit in der in der Zeichnung linken Ecke 68 des Rahmens 64 gleichfalls Klebeband 28 aufgetragen werden kann, ohne dass es eines Umsetzens der Grundplatte 12 bedarf, wird bei weiterer Bewegung der Grundplatte 12 in Richtung der Ecke 68 durch Verschwenken des Schwenkarms 16 der Schwenkhebel 20 weiter entgegen dem Uhrzeigersinn gedreht (Position C), um somit ungehindert das Klebeband 28 in der Ecke 68 und sodann auf den sich anschließenden Längsschenkel 78 auftragen zu können. Die Andrückrolle 30 befindet sich folglich vor der Achse 18, betrachtet in Auftragsrichtung 70.

Wie sich aus der zeichnerischen Darstellung ergibt, stehen die Andrückrolle 30, die Rollen 50, 44, die Antriebsrolle 27 und die weiteren Rollen 32, 52, 54 seitlich über der Grundplatte 12 vor, so dass problemlos auch ein umlaufender Rahmen mit einem Klebeband 28 versehen werden kann, da die Grundplatte eine Behinderung nicht darstellt.

Um spannungslos oder mit gewünschter vorgegebener Spannung das Klebeband 28 auf das Objekt - im Ausführungsbeispiel auf den Rahmen 64 - auftragen zu können, wird der Transport des Klebebands 28 mit dem Liner 29 über die Steuerung des die Grundplatte 12 bewegenden Roboters geregelt derart, dass die Transportstrecke pro Zeiteinheit auf die in der Zeiteinheit zurückgelegte Strecke der Grundplatte zu dem Objekt und der während dieser Zeiteinheit erfolgten Schwenkbewegung des Schwenkhebels 20 berücksichtigt werden. Wird folglich der Schwenkhebel 20 in Auftragsrichtung 70 des Klebebands verschwenkt, also von der Position B in die Position C, so wird über den Motor bzw. Antrieb 26 die Transportrolle 27 derart angetrieben, das die pro Zeiteinheit geförderte Länge des Klebebands 28 mit dem Liner 29 länger als die Strecke ist, die die Grundplatte 12 relativ zu dem Aufbringbereich des Objekts in derselben Zeiteinheit zurücklegt. Es wird zusätzlich die durch die Relativbewegung zwischen der Grundplatte 12 und der Andrückrolle 30 aufgrund der Schwenkbewegung sich ergebenden Strecke in der vorgegebenen Zeiteinheit berücksichtigt. Umgekehrt ist die Länge des aufzutragenden streifenförmigen Materials geringer als die zurückgelegte Strecke der Grundplatte 12, wenn während der Bewegung der Schwenkhebel 20 entgegen der Auftragsrichtung 70, also im Ausführungsbeispiel im Uhrzeigersinn, verschwenkt wird.

Der Aufbringbereich muss nicht geradlinig verlaufen, kann vielmehr auch z. B. in einer Ebene verlaufende Bogen einschließen.

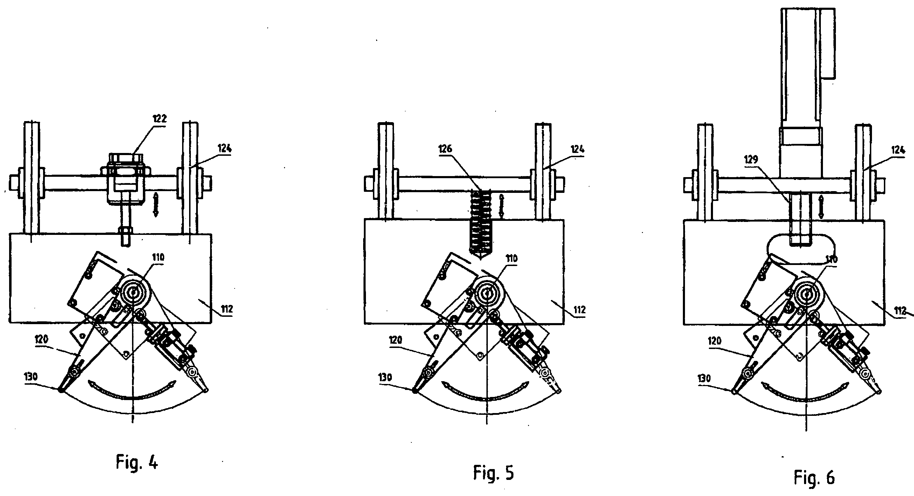

Die erfindungsgemäße Lehre wird jedoch auch dann nicht verlassen, wenn der Schwenkhebel ausschließlich eine Schwenkbewegung durchführt. In diesem Fall erübrigt sich die Verbindung mit einem Schwenkarm. Vielmehr kann der Schwenkhebel unmittelbar um eine von einer Halterung ausgehende Achse geschwenkt werden. Dies soll anhand der Fig. 4 bis 6 erläutert werden.

Im Ausführungsbeispiel der Fig. 4 ist eine Halterung 112, von der ein dem Schwenkhebel 20 entsprechender Schwenkhebel 120 ausgeht, der um eine von der Halterung 112 ausgehende und als erste Achse bezeichnete Achse 110 schwenkbar ist, mittels eines Zylinders wie Druckzylinder 122 verstellt werden, um den Hub zu realisieren, wie dieser nach dem Ausführungsbeispiel der Fig. 1 bis 3 durch das Eingreifen des von der Grundplatte 12 ausgehenden Stifts 36 in den Längsschlitz 34 des Schwenkhebels 20 realisiert wird. Der Druckzylinder 122, der von einem Träger 124 wie Gestell ausgehen kann, gleicht somit die ansonsten beim Verschwenken des Schwenkhebels 120 sich ergebende Abstandsveränderung der Andrückrolle 130 in Bezug auf ein nicht dargestelltes Objekt aus.

Im Ausführungsbeispiel der Fig. 5 ist die Halterung 112 gegenüber einem Träger 124 über ein Federelement 126 derart vorgespannt, dass die Halterung 112 ausweichen kann, wenn der Schwenkhebel 120 verschwenkt wird.

Das Ausführungsbeispiel der Fig. 6 stellt eine weitere Variante zur Erzielung des erforderlichen Hubs dar, um die Schwenkbewegung des Schwenkhebels 120 zu ermöglichen, ohne dass die erforderliche gleichmäßige Druckbeaufschlagung der Andrückrolle 130 auf ein streifenförmiges Material zum Aufbringen auf ein Objekt verändert wird bzw. ein Verschwenken aufgrund des Objekts unmöglich wäre. So geht von einem Träger 124 ein Spindelantrieb 129 aus, der mit der Halterung 112 verbunden ist und somit der gewünschte und erforderliche Hub ermöglicht wird.

Bei den Ausführungsbeispielen der Fig. 4 bis 6 wird der Schwenkhebel unmittelbar angetrieben, um verschwenkt zu werden. Dieses Verschwenken wird über einen Antrieb, der z. B. mit der Steuerung der Handhabungseinrichtung wie Roboter verbunden ist, mittels der die Halterung entlang des Objekts geführt wird, auf dem das Material aufgebracht werden soll. Dabei kann die Schwenkbewegung vorprogrammiert sein, wenn die Bewegung des Roboters und Geometrie in dem Bereich des Objekts bekannt ist, auf den das Material aufzubringen ist.

Bei dem Ausführungsbeispiel der Fig. 1 bis 3 erfolgt ein mittelbares aktives Betätigen des Schwenkelementes 12, von dem die Andrückrolle 30 ausgeht, und zwar über den Schwenkarm 16, der seinerseits über den Motor 38 wie Elektromotor verstellt wird.

Aufgrund der erfindungsgemäßen Lehre können problemlos Vertiefungen oder Ecken von Objekten gleichmäßig mit einem streifenförmigen Material versehen werden. Hierbei muss es sich nicht nur um ein Klebeband handeln, das über ein Trägerband wie Liner transportiert wird. Auch eine ein Trägerband aufweisende Dichtung, die z. B. in einem Rahmen oder in einer Nut eingebracht wird, kann aufgrund der erfindungsgemäßen Lehre platziert werden. All diese Beispiele sind jedoch nicht einschränkend zu verstehen. Gleiches gilt für den Begriff Trägerband.

**Bezugszeichenliste**

| | | | |
|---|---|---|---|
| 10 | Vorrichtung | 110 | Achse |
| 12 | Grundplatte | 112 | Halterung |
| 14 | Achse | 120 | Schwenkhebel |
| 16 | Schwenkarm | 122 | Zylinder |
| 18 | Achse | 124 | Träger |
| 20 | Schwenkhebel | 129 | Spindelantrieb |
| 22 | Längsschenkel | 130 | Andrückrolle |
| 24 | Querschenkel | | |
| 26 | Antrieb | | |
| 27 | Antriebsrolle | | |
| 28 | Klebeband | | |
| 29 | Liner | | |
| 30 | Andrückrolle | | |
| 32 | Rolle | | |
| 34 | Längsschlitz | | |
| 36 | Stift | | |
| 38 | Antrieb | | |
| 40 | Halterung | | |
| 44 | Führungsrolle | | |
| 46 | Bereich | | |
| 48 | Umlenkrolle | | |
| 50 | Umlenkrolle | | |
| 52 | Umlenkrolle | | |
| 54 | Umlenkrolle | | |
| 56 | Schneideinrichtung | | |
| 58 | Schneidetisch | | |
| 60 | Kontaktbereich | | |
| 62 | Innenseite | | |
| 64 | Rahmen | | |
| 66 | Ecke | | |
| 68 | Ecke | | |
| 70 | Pfeil | | |
| 72 | Schenkel | | |
| 74 | Pfeil | | |
| 76 | Längsschenkel | | |

## Patentansprüche

1. Verfahren zum Aufbringen eines Materials (28), wie streifenförmigen oder flächigen Materials, auf einen Kontaktbereich (60, 62) eines Objektes (64), insbesondere auf einen ersten Abschnitt wie Schenkel (72) eines Rahmens (64), der von zumindest einem von dem ersten Abschnitt ausgehenden oder diesen begrenzenden zweiten Abschnitt (76), wie Schenkel, begrenzt ist, insbesondere zum Aufbringen des Materials in einen Eckbereich des Objekts, wobei das streifenförmigen Material in einer Aufbringrichtung (70) mittels eines Andrückelementes (30) auf den Kontaktbereich aufgebracht wird und das Andrückelement von einem verschwenkbaren Schwenkelement (20, 120) ausgeht oder ein Abschnitt von diesem ist, das mit einer Halterung (12, 112) verbunden ist,
**dadurch gekennzeichnet ,**
**dass** das Schwenkelement (20, 120) während des Aufbringens des Materials (28) auf den Kontaktbereich (60, 62) in und/oder entgegen der Aufbringrichtung (70) verschwenkt wird und im Verlauf der Schwenkbewegung, während der das Material das Objekt kontaktiert, eine Hubbewegung durchführt, wobei das Schwenkelement (20; 120) mittelbar oder unmittelbar mittels eines Antriebs (38) aktiv verschwenkt wird.

2. Verfahren nach Anspruch 1,
**dadurch gekennzeichnet,**
**dass** die Hubbewegung zu der Halterung (12, 112) und/oder mittels der Halterung erfolgt.

3. Verfahren nach Anspruch 1 oder 2,
**dadurch gekennzeichnet,**
**dass** das Material (28) mittels eines Antriebs (26) zu dem Andrückelement (30) transportiert wird und die Transportlänge in Abhängigkeit zum einen von der Relativbewegung zwischen der Halterung (12) und dem Kontaktbereich (60, 62) und zum anderen der Schwenkbewegung während des Druckkontakts zwischen dem Andrückelement und dem Kontaktbereich geregelt wird.

4. Verfahren nach zumindest einem der vorhergehenden Ansprüche,
**dadurch gekennzeichnet,**
**dass** die Halterung (12) und/oder das Objekt (64) mittels einer Handhabungseinrichtung bewegt wird und der Antrieb (26) für den Transport des Materials (28) mittels der Steuerung der Handhabungseinrichtung geregelt wird.

5. Verfahren nach zumindest einem der vorhergehenden Ansprüche,
**dadurch gekennzeichnet,**
**dass** das Schwenkelement (20) einerseits um eine von einem von der Halterung (12) ausgehenden Schwenkarm (16) ausgehende Achse (18) geschwenkt und andererseits mittels eines von der Halterung ausgehenden und in einen in dem Schwenkelement vorhandenen Längsschlitz (34) eingreifenden Vorsprungs (36) geführt wird.

6. Verfahren nach zumindest einem der vorhergehenden Ansprüche,
**dadurch gekennzeichnet,**
**dass** die Halterung (112) mittels eines Betätigungselements wie Zylinder (122), Feder (126), Spindel quer zum Kontaktbereich verstellt wird.

7. Verfahren nach zumindest einem der vorhergehenden Ansprüche,
**dadurch gekennzeichnet,**
**dass** mittels des Andrückelementes (30) das Material (28) in zumindest einem in dem Objekt (64) vorhandenem Eckbereich (66, 68), vorzugsweise in zwei in Aufbringrichtung entgegengesetzt angeordneten Eckbereichen des Objekts aufgebracht wird.

8. Vorrichtung (10) zum Aufbringen eines Materials (28), wie streifenförmigen oder flächigen Materials, insbesondere eines einen Liner (29) aufweisenden Klebebands (28), auf einen Kontaktbereich (60, 62) eines Objekts (64), insbesondere eines zumindest eine Innenecke (66, 68) aufweisenden Objekts wie Rahmen, umfassend
- eine Halterung (12, 112), die relativ zu dem Objekt bewegbar ist,
- einen ersten Antrieb (26) zum Transport des Materials,
- ein von einem Schwenkelement (20, 120) ausgehendes Andrückelement (30, 130), dem das streifenförmige Material mittels des ersten Antriebs zuführbar ist und über das durch Druckbeaufschlagung das streifenförmige Material auf den Kontaktbereich aufbringbar ist, wobei das Schwenkelement mit der Halterung verbunden ist,
- sowie ggfs. eine Schneideinrichtung (56, 58).
**dadurch gekennzeichnet,**
**dass** das Schwenkelement (120) um eine von der Halterung (112) ausgehende erste Achse (110) in oder entgegen Aufbringrichtung des Materials schwenkbar und die Halterung während des Aufbringens des Materials (28) auf das Objekt und in Kontakt mit diesem abstandsmäßig quer zum Kontaktbereich verstellbar ist oder
**dass** das Schwenkelement (20) um eine von einem Schwenkarm (16) ausgehende zweite Achse (18) schwenkbar ist, der von der Halterung (12) ausgeht und um eine dritte Achse (14) schwenkbar ist, und dass das Schwenkelement einen Längsschlitz (34) aufweist, der von einem von der Halterung ausgehenden Vorsprung (36) durchsetzt ist, wobei der Längsschlitz in Bezug auf den Kontaktbereich derart verläuft, dass das Schwenkelement unabhängig von seiner Stellung über das Andrückelement (30) zum Aufbringen des streifenförmigen Materials dieses in Richtung des Kontaktbereichs (60, 62) zum Kontaktieren von diesem druckbeaufshlagt, wobei das Schwenkelement (20) mittelbar oder unmittelbar mittels eines zweiten Antriebs (38) schwenkbar ist.

9. Vorrichtung nach Anspruch 8,
**dadurch gekennzeichnet,**
**dass** die Halterung (120) mittels einer Stelleinrichtung wie Feder (126), Zylinder (122), Spindel zu dem Kontaktbereich verstellbar ist.

10. Vorrichtung nach zumindest Anspruch 8 oder 9,
**dadurch gekennzeichnet ,**
**dass** der Längsschlitz (34) entlang Verbindungslinie zwischen der zweiten Achse (18) und dem Andrückelement (30) verläuft.

11. Vorrichtung nach zumindest einem der Ansprüche 8 bis 10,
**dadurch gekennzeichnet ,**
**dass** das Objekt (64) und/oder die Halterung (12) mittels einer Handhabungseinrichtung verstellbar ist und dass über deren Steuerung der erste Antrieb (26) zum Transport des Materials in Abhängigkeit von der Relativbewegung zwischen einerseits dem Objekt und der Halterung und andererseits der Schwenkbewegung des Schwenkelements (20) während des Aufbringens des Materials (28) regelbar ist.

12. Vorrichtung nach zumindest einem der Ansprüche 8 bis 11,
**dadurch gekennzeichnet ,**
**dass** der erste Antrieb (26) von dem Schwenkelement (20) ausgeht.

13. Vorrichtung nach zumindest einem der Ansprüche 8 bis 12,
**dadurch gekennzeichnet,**
**dass** von dem Schwenkelement (20) die Schneideinrichtung (56, 58) ausgeht.

14. Vorrichtung nach zumindest Anspruch 8,
**dadurch gekennzeichnet ,**
**dass** das Schwenkelement (20) mittels des Schwenkarms (16) über den von der Halterung (12) ausgehenden zweiten Antrieb (38) verschwenkbar ist.

## Claims

1. A method for applying a material (28) such as a strip-shaped or planar material onto a contact area (60, 62) of an object (64), in particular onto a first section such as a leg (72) of a frame (64) that is limited by at least one second section (76) such as a leg emanating from the first section or limiting the latter, in particular for applying the material in a corner area of the object, whereby the strip-shaped material is applied in an application direction (70) by a pressure element (30) onto the contact area and the pressure element emanates from a pivotable pivoting element (20, 120) or is a section of the latter that is connected to a holder (12, 112),
**characterized in that**
the pivoting element (20, 120) is pivoted during the application of the material (28) onto the contact area (60, 62) in and/or counter to the direction of application (70) and that a lifting movement is performed during the course of the pivoting movement during which the material contacts the object, whereby the pivoting element (20; 120) is actively pivoted indirectly or directly by a drive (38).

2. The method according to claim 1,
**characterized in that**
the lifting movement takes place to the holder (12, 112) and/or by the holder.

3. The method according to claim 1 or 2,
**characterized in that**
the material (28) is transported by a drive (26) to the pressure element (30) and that the transport length is regulated as a function on the one hand of the relative movement between the holder (12) and the contact area (60, 62) and on the other hand of the pivoting movement during the pressure contact between the pressure element and the contact area.

4. The method according to at least one of the preceding claims,
**characterized in that**
the holder (12) and/or the object (64) is/are moved by a manipulating device and that the drive (26) for the transport of the material (28) is regulated by the control of the manipulating device.

5. The method according to at least one of the preceding claims,
**characterized in that**
the pivoting element (20) is pivoted on the one hand about a shaft (18) emanating from a pivoting arm (16) emanating from the holder (12) and on the other hand is guided by a projection (36) emanating from the holder and engaging in a longitudinal slot (34) present in the pivoting element.

6. The method according to at least one of the preceding claims,
**characterized in that**
the holder (112) is moved by an actuating element such as a cylinder (122), spring (126), spindle transversely to the contact area.

7. The method according to at least one of the preceding claims,
**characterized in that**
the material (28) is applied by the pressure element (30) in at least one corner area (66, 68) present in the object (64), preferably in two corner areas of the object arranged counter to the direction of application.

8. A device (10) for the application of a material (28) such as a strip-shaped or planar material, in particular an adhesive band (28) with a liner (29), onto a contact area (60, 62) of an object (64), in particular an object such as a frame comprising at least one inner corner (66, 68), comprising
- a holder (12, 112) that can move relative to the object,
- a first drive (26) for transporting the material,
- a pressure element (30, 130) emanating from a pivot element (20, 120) to which pressure element the strip-shaped material can be supplied by the first drive and by which the strip-shaped material can be applied onto the contact area by pressure loading, whereby the pivot element is connected to the holder,
- and optionally a cutting device (56, 58),
**characterized in that**
the pivoting element (120) can pivot about a first shaft (110) emanating from the holder (112) in or counter to the direction of application of the material and that the holder can be moved during the application of the material (28) onto the object and in contact with the latter transversely to the contact area as regards its distance, or
that the pivoting element (20) can pivot about a second shaft (18) emanating from a pivoting arm (16), which arm emanates from the holder (12) and can pivot about a third shaft (14), and that the pivoting element comprises a longitudinal slot (34) through which a projection (36) runs that emanates from the holder, whereby the longitudinal slot runs in such a manner relative to the contact area that the pivoting element, independently of its position over the pressure element (30) for applying the strip-shaped material, pressure-loads this material in the direction of the contact area (60, 62) for contacting the latter, whereby the pivoting element (20) can be pivoted indirectly or directly by a second drive (38).

9. The device according to claim 8,
**characterized in that**
the holder (120) can be moved by an adjusting device such as a spring (126), cylinder (122), spindle to the contact area,

10. The device according to at least claim 8 or 9,
**characterized in that**
the longitudinal slot (34) runs along connection line between the second shaft (18) and the pressure element (30).

11. The device according to at least one of the claims 8 to 10,
**characterized in that**
the object (64) and/or the holder (12) is/are adjustable by a manipulating device and that the first drive (26) can be regulated by the control of that manipulating device for transporting the material as a function of the relative movement between on the one hand the object and the holder and on the other hand of the pivoting movement of the pivoting element (20) during the application of the material (28).

12. The device according to at least one of the claims 8 to 11,
**characterized in that**
the first drive (26) emanates from the pivoting element (20).

13. The device according to at least one of the claims 8 to 12,
**characterized in that**
the cutting device (56, 58) emanates from the pivoting element (20).

14. The device according to at least claim 8,
**characterized in that**
the pivoting element (20) can be pivoted by the pivoting arm (16) by a second drive (38) emanating from the holder (12).

## Revendications

1. Procédé d'application d'un matériau (28), tel qu'un matériau sous forme de bande ou de nappe, sur une zone de contact (60, 62) d'un objet (64), notamment sur une première section telle qu'un flanc (72) d'un cadre (64), qui est limitée par au moins une deuxième section (76), telle qu'un flanc, partant de la première section ou délimitant celle-ci, ledit procédé servant notamment à l'application du matériau dans un angle de l'objet, sachant que le matériau sous forme de bande est appliqué dans un sens d'application (70) au moyen d'un élément presseur (30) sur la zone de contact, et que l'élément presseur prolonge un élément pivotant (20, 120) ou fait partie de cet élément pivotant qui est relié à un support (12, 112),
**caractérisé en ce**
**que** l'élément pivotant (20, 120) bascule dans le sens d'application (70) et/ou dans le sens opposé pendant l'application du matériau (28) sur la zone de contact (60, 62), et qu'il effectue un mouvement de levée au cours du pivotement pendant que le matériau entre en contact avec l'objet, l'élément pivotant (20 ; 120) étant activement basculé indirectement ou directement par un entraînement (38).

2. Procédé selon la revendication 1,
**caractérisé en ce**
**que** le mouvement de levée a lieu en direction du support (12, 112) et/ou au moyen du support.

3. Procédé selon la revendication 1 ou 2,
**caractérisé en ce**
**que** le matériau (28) est transporté vers l'élément presseur (30) au moyen d'un entraînement (26) et que la longueur de transport est régulée en fonction, d'une part, du mouvement relatif entre le support (12) et la zone de contact (60, 62) et,
d'autre part, du pivotement pendant le contact sous pression entre l'élément presseur et la zone de contact.

4. Procédé selon au moins une des revendications précédentes,
**caractérisé en ce**
**que** le support (12) et/ou l'objet (64) est/sont déplacé(s) au moyen d'un manipulateur et que l'entraînement (26) pour le transport du matériau (28) est régulé au moyen de la commande du manipulateur.

5. Procédé selon au moins une des revendications précédentes,
**caractérisé en ce**
**que** l'élément pivotant (20) pivote d'une part autour d'un axe (18) partant d'un bras pivotant (16) partant lui-même du support (12), et est d'autre part guidé par un taquet (36) partant du support et s'engageant dans une fente oblongue (34) présente dans l'élément pivotant.

6. Procédé selon au moins une des revendications précédentes,
**caractérisé en ce**
**que** le support (112) est placé transversalement à la zone de contact au moyen d'un élément d'actionnement tel qu'un vérin (122), un ressort (126) ou une broche.

7. Procédé selon au moins une des revendications précédentes,
**caractérisé en ce**
**que** le matériau (28) est appliqué au moyen de l'élément presseur (30) dans au moins un des angles (66, 68) présents sur l'objet (64), de préférence dans deux angles de l'objet, opposés l'un à l'autre dans le sens d'application.

8. Dispositif (10) servant à appliquer un matériau (28), tel qu'un matériau sous forme de bande ou de nappe, notamment une bande adhésive (28) dotée d'un film (29), sur une zone de contact (60, 62) d'un objet (64), notamment d'un objet, tel qu'un cadre, présentant au moins un angle intérieur (66, 68), ledit dispositif comprenant
- un support (12, 112) pouvant être déplacé relativement à l'objet,
- un premier entraînement (26) servant au transport du matériau,
- un élément presseur (30, 130) partant d'un élément pivotant (20, 120) et pouvant être alimenté en matériau en bande au moyen du premier entraînement et au moyen duquel peut être appliqué le matériau en bande sur la zone de contact en exerçant une pression, l'élément pivotant étant relié au support,
- ainsi qu'un dispositif de coupe (56, 58) le cas échéant,
**caractérisé en ce que** l'élément pivotant (120) peut pivoter dans le sens d'application du matériau ou dans le sens inverse autour d'un premier axe (110) partant du support (112), et que le support peut être déplacé transversalement à la zone de contact pour varier l'espacement pendant l'application du matériau (28) sur l'objet et en contact avec celui-ci
ou
que l'élément pivotant (20) peut pivoter autour d'un deuxième axe (18) partant d'un bras pivotant (16) partant lui-même du support (12) et pouvant pivoter autour d'un troisième axe (14), et que l'élément pivotant présente une fente oblongue (34) qui accueille un taquet (36) partant du support, sachant que la fente oblongue s'étend par rapport à la zone de contact de manière telle que l'élément pivotant, quelle que soit sa position au-dessus de l'élément presseur (30) servant à appliquer le matériau en bande, appuie sur le matériau en direction de la zone de contact (60, 62) afin de le faire adhérer, l'élément pivotant (20) pouvant pivoter indirectement ou directement au moyen d'un deuxième entraînement (38).

9. Dispositif selon la revendication 8,
**caractérisé en ce**
**que** le support (120) peut être déplacé par rapport à la zone de contact au moyen d'un élément de réglage tel qu'un ressort (126), un vérin (122) ou une broche.

10. Dispositif selon au moins la revendication 8 ou 9,
**caractérisé en ce**
**que** la fente oblongue (34) s'étend le long de la ligne de jonction entre le deuxième axe (18) et l'élément presseur (30).

11. Dispositif selon au moins une des revendications 8 à 10,
**caractérisé en ce**
**que** l'objet (64) et/ou le support (12) peut/peuvent être déplacé(s) au moyen d'un manipulateur et qu'avec la commande dudit manipulateur, le premier entraînement (26) pour le transport du matériau peut être régulé en fonction, d'une part, du mouvement relatif entre l'objet et le support et, d'autre part, du pivotement de l'élément pivotant (20) pendant l'application du matériau (28).

12. Dispositif selon au moins une des revendications 8 à 11,
**caractérisé en ce**
**que** le premier entraînement (26) part de l'élément pivotant (20).

13. Dispositif selon au moins une des revendications 8 à 12,
**caractérisé en ce**
**que** le dispositif de coupe (56, 58) part de l'élément pivotant (20).

14. Dispositif selon au moins la revendication 8,
**caractérisé en ce**
**que** l'élément pivotant (20) peut pivoter au moyen du bras pivotant (16) via le deuxième entraînement (38) partant du support (12).
